# EUROPÄISCHE PATENTSCHRIFT

(11) **EP 1 767 902 B1**
(45) Veröffentlichungstag und Bekanntmachung des Hinweises auf die Patenterteilung: **01.08.2012**
(21) Anmeldenummer: 05020907.1
(22) Anmeldetag: 26.09.2005
(51) Int. Cl.: G01C 21/34

(54) **Verfahren zur Bestimmung wenigstens einer Route zwischen einem Ausgangspunkt und einem Zielpunkt anhand digitalisierter Kartendaten und dazugehöriges Navigationsgerät**
Method of determining at least one route between a starting location and a destination location based on digital map data and navigation device therefor
Procédé pour déterminer au moins une route entre un point de départ et un point d'arrivée à base de données cartographiques numériques et dispositif de navigation pour sa mise en oeuvre

(43) Veröffentlichungstag der Anmeldung: 28.03.2007
(73) Patentinhaber: Navigon AG, 20251 Hamburg (DE)
(72) Erfinder: Jansen, Ralph, 97340 Marktbreit (DE)
(74) Vertreter: von den Steinen, Axel

(56) Entgegenhaltungen:
- EP-A- 1 256 918
- EP-A- 1 526 358
- WO-A-99/57519
- DE-A1- 3 719 017
- US-B1- 6 263 277

## Beschreibung

Die Erfindung betrifft ein Verfahren zur Bestimmung wenigstens einer Route zwischen einem Ausgangspunkt und einem Zielpunkt anhand digitalisierter, eine Landkarte wiedergebender, insbesondere Informationen hinsichtlich vorhandener Verkehrswege enthaltender Kartendaten gemäß dem Oberbegriff des Anspruchs 1.

Als "Verkehrswege" werden hier für ein zu navigierendes Objekt nutzbare Wege verstanden, also z.B. bei einer Kraftfahrzeugnavigation für ein solches Kraftfahrzeug befahrbare Wege und Straßen oder bei einer Navigation für einen Fußgänger für einen solchen gangbare Wege.

In üblichen Navigationsgeräten werden bei der Routenbestimmung anhand digitaler Kartendaten die Verkehrswege einer Landkarte der Reihe nach abgesucht, um aus den möglichen Wegen zwischen Anfangspunkt und Zielpunkt die beste Route herauszusuchen. Die Dauer der Routenbestimmung steigt mit der Anzahl der abzusuchenden Verkehrswege an. Besonders bei weit entfernten Zielen werden sehr viele Verkehrswege abgesucht, was zu langen Berechnungszeiten führt.

Die EP 1 526 358 A1 beschreibt ein Verfahren zur Bestimmung einer für die Planung einer optimalen Gesamtroute geeigneten Zerlegung eines Straßennetzes aus Kanten und Knoten, wobei das Netz in mindestens zwei Zellen zerlegt wird und eine optimale Teilroute für jede Zelle bestimmt wird, wobei die Gesamtheit der optimalen Teilrouten ein reduziertes Netz ergeben. Zur Bestimmung der optimalen Gesamtroute wird aus einer Vielzahl von Netzzerlegungen diejenige gewählt, deren reduziertes Netz für ein gegebenes Kriterium einen minimalen bzw. maximalen Wert annimmt.

Die DE 37 19 017 A1 offenbart ein Verfahren und eine Vorrichtung zur Bestimmung einer Fahrroute zwischen einem Startpunkt und einem Zielpunkt, wobei das Straßennetz in wenigstens zwei Ebenen mir unterschiedlicher Maschendichte und Gebietsgröße zerlegt wird, wobei in höheren Ebenen die Gebietsgröße zunimmt und die Maschendichte abnimmt. Durch Verknüpfen von Teilgebieten oder Wechsel in andere Ebenen wird überprüft, ob der Zielpunkt vom Startpunkt aus erreichbar ist. Bei Bejahung der Abfrage wird eine Route festgelegt.

Die WO 99/57519 lehrt ein Verfahren, bei dem nach Feststellen einer ersten Position, insbesondere der aktuellen Fahrzeugposition, auf einer Karte, die in Form einer Datenbank vorliegt, und nach Anzeige eines Positionsanzeigers an einer zweiten Position auf der in einer Datenbank vorliegenden Karte auf einer Anzeigeeinrichtung ein Kurs zwischen der zweiten und der ersten Position berechnet und auf Grund des Kurses eine Richtung von der zweiten Position zur ersten Position angezeigt wird.

Allerdings gilt es anzustreben, die Berechnungszeit für die Routenbestimmung auf ein für den Nutzer annehmbare Maß zu reduzieren.

Es soll mit der Erfindung daher ein Verfahren der eingangs genannten Art dahingehend verbessert werden, dass die für die Routenbestimmung benötigte Rechenzeit insbesondere auch bei der Routenbestimmung auf großen Distanzen auf ein Höchstmaß beschränkt wird bei gleichzeitig zuverlässiger Auswahl einer optimalen Route. Zugleich soll vorzugsweise vorab eine Abschätzung der Dauer der Routenbestimmung ermöglicht werden. Zudem soll ein entsprechend eingerichtetes Navigationsgerät angegeben werden.

Gelöst wird diese Aufgabe erfindungsgemäß durch ein Verfahren mit den Merkmalen des Patentanspruchs 1. Ein die Aufgabe lösendes Navigationsgerät ist in Patentanspruch 5 angegeben. Vorteilhafte Weiterbildungen des Verfahrens sind in den Unteransprüchen 2 bis 4 gekennzeichnet.

Erfindungsgemäß wird die Landkarte in einem ersten Schritt in kleine Ausschnitte bzw. Teilgebiete aufgeteilt, bzw. es werden die Kartendaten entsprechend zu Gruppen zusammengefasst. Diese Aufteilung kann insbesondere unabhängig von einer konkreten Routenanfrage erfolgen. Dieser Schritt muss demnach nicht bei jeder Routenbestimmung erneut erfolgen, es wird vielmehr in der Regel bei jeder Routenbestimmung auf eine einmal erfolgte Aufteilung der Kartendaten in Gruppen zurückgegriffen. Die Aufteilung der Kartendaten kann zudem losgelöst von einem Navigationsgerät bereits bei der Aufarbeitung der Kartendaten erfolgen. Diese Kartendaten können dann bereits entsprechend in Gruppen aufgeteilt in das Navigationsgerät eingebracht werden.

In einem zweiten Schritt werden dann erfindungsgemäß die bei der Routenbestimmung zu berücksichtigenden Gruppen von Kartendaten ermittelt. Dieser zweite Schritt kann faktisch bei der aktuellen Routenbestimmung ein erster Schritt sein, wenn die Festlegung der Gruppen in dem oben diskutieren ersten Schritt allgemeingültig erfolgt ist. Die Auswahl der zu berücksichtigenden Kriterien erfolgt nach vorgebbaren bzw. vorgegebenen Rahmenbedingungen.

Schließlich wird nach bekannten Regeln eine Route bzw. es werden mehrere Routen bestimmt, wobei nur die Kartendaten aus den zuvor ermittelten Gruppen berücksichtigt werden.

Wird vor der eigentlichen Routenbestimmung das abzusuchende Gebiet (die zu berücksichtigenden Gruppen von Kartendaten) erfindungsgemäß eingeschränkt, wird damit automatisch auch die Anzahl der abzusuchenden Verkehrswege geringer und die Routenbestimmung schneller.

Die Einschränkung des Suchgebietes vor der Routenbestimmung erfordert allerdings eine Abwägung, welche alternativen Wege/Landkartenausschnitte für die nachfolgende Berechnung absolut nicht in Frage kommen. Durch geographische Besonderheiten können einige Gebiete nicht eingeschränkt werden, da hier weiträumige Umgehungen von Hindernissen wie z.B. Seen erforderlich sind.

Weiterhin müssen auch für den Fall von Sperrungen von Verkehrswegen alternative Routen weiterhin zu finden sein.

Der hier aufgezeigte Lösungsansatz sieht deshalb vorzugsweise eine manuelle Festlegung von Landkartenausschnitten bzw. entsprechenden Gruppen von Kartendaten vor. Bei dieser Festlegung werden einzelne Ausschnitte der Landkarte definiert, die durchgehende Verkehrswege und ausreichende alternative Wege enthalten, um ein solches Gebiet sicher durchqueren zu können. Einzelne so gefundene Ausschnitte der Landkarte dürfen sich dabei überlappen.

Vorzugsweise werden den einzelnen im ersten Schritt gebildeten Gruppen von Kartendaten jeweils Kostenwerte zugewiesen, die durch die Anzahl der in dem jeweils zugehörigen Landkartenausschnitt (dem zugehörigen Gebiet) gelegenen Verkehrswegen gebildet sind (Anspruch 2). Es wird in diesem Fall mit anderen Worten für jeden Ausschnitt der Landkarte die Anzahl der darin enthaltenen Verkehrswege ermittelt. Durch geeignetes Aneinanderreihen der Ausschnitte von dem Ausschnitt, in dem der Ausgangspunkt liegt, zu dem Ausschnitt, in dem der Zielpunkt liegt, wird eine Ermittlung der Anzahl der insgesamt für die Routenbestimmung abzusuchenden Verkehrswege möglich. Diese Anzahl kann dann zur Abschätzung der Dauer der Routenbestimmung verwendet werden. Ferner wird diese Anzahl zur Begrenzung dieser Dauer auf ein Höchstmaß begrenzt.

Die Routenbestimmung erfolgt anschließend durch Absuchen der ausgewählten Gruppen von Kartendaten bzw. der entsprechenden Ausschnitte der Landkarte. Somit wird eine schnellere, auf bestimmte Gebiete beschränkte Routenbestimmung erreicht, die innerhalb der abgeschätzten Zeit durchzuführen ist.

Genauer wird die Abschätzung der für die Routenbestimmung erforderlichen Berechnungszeit, wenn das Verfahren wie in Anspruch 3 angegeben ausgebildet ist. So wird eine Doppelzählung von Verkehrswegen verhindert.

Gemäß einer in Anspruch 4 angegebenen, bevorzugten Lösung lassen sich die festgelegten Ausschnitte der Landkarte wieder als Graph darstellen, wobei jede definierte Gruppe von Kartendaten (bzw. der entsprechende Ausschnitt aus der Landkarte) einem Knoten entspricht. Berühren oder überlappen sich zwei Ausschnitte, so werden die beiden zugeordneten Knoten durch eine Kante verbunden. Durch diese Abbildung entsteht ein Graph, der als abstrakte Karte aufgefasst werden kann. Dieser Graph wird bei der Routenberechnung genutzt, um in dem zweiten Schritt die abzusuchenden Ausschnitte der Landkarte (zu berücksichtigenden Gruppen von Kartendaten) vorab festzulegen.

Dazu wird festgestellt, in welcher Gruppe von Kartendaten (ggf. welchen Gruppen) der Ausgangspunkt liegt und in welcher Gruppe von Kartendaten (ggf. in welchen Gruppen) der Zielpunkt liegt. Die diesen Gruppen entsprechenden Knoten in der abstrakten Karte werden als mögliche Start- und Zielknoten übernommen.

Vor der eigentlichen Routenbestimmung kann dann sehr schnell auf der hinsichtlich der Datenmenge kleinen abstrakten Karte die günstigste Sequenz von Ausschnitten der Landkarte (Gruppen von Kartendaten) ermittelt werden, die für eine erfolgreiche und ausreichend schnelle Routenbestimmung in Frage kommen.

Um eine günstige Sequenz zu ermitteln, wird jedem Knoten und jeder Kante der abstrakten Karte in der oben beschriebenen Weise ein Kostenwert zugewiesen. Es erhält also jeder Knoten als Kostenwert die Anzahl der in dem korrespondierenden Ausschnitt der Landkarte enthaltenen Verkehrswege; und zur Bestimmung des Kostenwertes einer Kante wird ermittelt, wie viele Verkehrswege sich in der Schnittmenge der beiden den mit der Kante verbundenen Knoten zugeordneten Landkartenausschnitte befinden. Eine Kante erhält dann als Kostenwert die negative Anzahl der im überlappenden Bereich enthaltenen Verkehrswege bzw. den Wert Null, falls keine Überlappung vorliegt. Der Kostenwert für eine Sequenz von Ausschnitten aus der Landkarte ergibt sich letztlich aus der Summe der Einzelkosten für die in der Sequenz enthaltenen Kanten und Knoten. Fällt ein Ausgangsknoten mit einem Zielknoten zusammen, dann ist in diesem Fall nur der Kostenwert dieses Knotens zu verwenden.

Da der Ausgangs- oder der Zielpunkt jeweils in mehreren überlappenden Ausschnitten der Landkarte bzw. den entsprechenden Gruppen von Kartendaten enthalten sein kann, wird für alle möglichen Paarungen von Ausgangs- und Zielknoten die günstigste Sequenz ermittelt.

Durch die beschriebene Kostenfunktion wird jeder Sequenz von Ausschnitten der Landkarte die darin enthaltene Anzahl von Verkehrswegen als Kostenwert zugewiesen. Damit ist leicht abzuschätzen, welchen Berechnungsaufwand die nachfolgende Routenbestimmung haben wird. Je geringer die Anzahl der abzusuchenden Verkehrswege ist, umso geringer wird der Berechnungsaufwand.

Einige Navigationssysteme beziehen auch Stauinformationen in die Routenbestimmung mit ein. Um möglichst alle staufreien Umwege zu finden, müssen diese Systeme eine größere Menge von alternativen Wegen untersuchen. Es kann dabei erforderlich sein, bei der Routenbestimmung eine größere Anzahl von alternativen Wegen zu untersuchen, als dies nur durch das Absuchen der günstigsten Sequenz von Ausschnitten der Landkarte möglich ist. Da für jede mögliche Sequenz von Ausschnitten aus der Landkarte eine schnelle Kostenermittlung möglich ist, kann mit dem vorgestellten Verfahren das abzusuchende Gebiet bzw. die der Berechnung zugrunde zu legenden Kartendaten so lange durch Hinzufügen weiterer Ausschnitte bzw. Gruppen von Kartendaten ergänzt werden, bis eine Kostenschranke erreicht wird. Diese Kostenschranke entspricht der noch tolerierbaren Berechnungszeit. So wird durch die Selektion von Ausschnitten der Landkarte innerhalb einer vorgegebenen Berechnungszeit die bestmögliche Anzahl von alternativen Wegen untersucht.

## Patentansprüche

1. Verfahren zur Bestimmung wenigstens einer Route zwischen einem Ausgangspunkt und einem Zielpunkt anhand digitalisierter, eine Landkarte wiedergebender, insbesondere Informationen hinsichtlich vorhandener Verkehrswege enthaltender Kartendaten, wobei in einer Recheneinheit mögliche Routen unter Einbeziehung der zwischen dem Ausgangpunkt und dem Zielpunkt verlaufenden Verkehrswege errechnet werden und durch Vergleich der möglichen Routen eine oder mehrere nach gewählten Kriterien bestimmte beste Route(n) festgelegt wird/werden, wobei
in einem ersten Schritt die Kartendaten in Gruppen aufgeteilt werden, die jeweils einen Ausschnitt der Landkarte repräsentieren, wobei jeder in diesem Schritt erhaltenen Gruppe als Kostenwert die Anzahl der in dem korrespondierenden Ausschnitt der Landkarte enthaltenen Verkehrswege zugeordnet wird,
in einem zweiten Schritt anhand vorgebbarer bzw. vorgegebener Rahmenbedingungen eine Auswahl von für die Routenbestimmung zu berücksichtigenden Gruppen von Kartendaten bzw. entsprechender Ausschnitte der Landkarte erfolgt und
in einem dritten Schritt die Routenbestimmung unter Einbeziehung lediglich der in den zu berücksichtigenden Gruppen von Kartendaten enthaltenen Verkehrswegen erfolgt,
**dadurch gekennzeichnet, dass** für die in dem zweiten Schritt vorgebbaren bzw. vorgegebenen Rahmenbedingungen eine maximale Summe der Kostenwerte von zu berücksichtigenden Gruppen von Kartendaten gewählt wird.

2. Verfahren nach Anspruch 1, **dadurch gekennzeichnet, dass** bei einer Überlappung oder Angrenzen der durch zwei oder mehr Gruppen von Kartendaten repräsentierten Ausschnitte der Landkarte die Anzahl der in den überlappenden bzw. angrenzenden Bereichen enthaltenen Verkehrswege diesen gesondert als negativer Kostenwert zugeordnet und bei der Aufsummierung der Kostenwerte der angrenzenden bzw. überlappenden Gruppen mit addiert wird.

3. Verfahren nach Anspruch 2, **dadurch gekennzeichnet, dass** für die Auswahl der zu berücksichtigenden Gruppen in dem zweiten Schritt die einzelnen Gruppen als Knoten und die überlappenden bzw. angrenzenden Bereichen als die die überlappenden bzw. angrenzenden Ausschnitte der Landkarte repräsentierenden Knoten verbindende Kanten angenommen werden und dass unter Berücksichtigung des maximal erlaubten Kostenwertes auf einer so gebildeten abstrakten Karte ein abstrakter Weg zwischen den Knoten, in denen der Anfangs- und der Zielpunkt liegen, ermittelt wird, wobei die entlang dieses abstrakten Weges liegenden Knoten die in dem dritten Schritt zu berücksichtigenden Gruppen von Kartendaten repräsentieren.

4. Verfahren nach einem der vorhergehenden Ansprüche, **dadurch gekennzeichnet, dass** die Auswahl der bei der Routenbestimmung zu berücksichtigenden Gruppen von Kartendaten anhand einer maximal erlaubten Berechnungszeit für die Routenbestimmung erfolgt.

5. Navigationsgerät zur Bestimmung wenigstens einer Route zwischen einem Ausgangspunkt und einem Zielpunkt anhand digitalisierter, eine Landkarte wiedergebender, insbesondere Informationen hinsichtlich vorhandener Verkehrswege enthaltender Kartendaten, welches eine Recheneinheit zur Errechnung möglicher Routen unter Einbeziehung der zwischen dem Ausgangspunkt und dem Zielpunkt verlaufenden Verkehrswege und zur Festlegung einer oder mehrerer besten Route(n) durch den Vergleich der möglichen Routen nach gewählten Kriterien aufweist, wobei das Navigationsgerät so eingerichtet ist, dass
die Kartendaten in Gruppen aufgeteilt vorliegen, die jeweils einen Ausschnitt der Landkarte repräsentieren, dass jeder Gruppe als Kostenwert die Anzahl der in dem korrespondierenden Ausschnitt der Landkarte enthaltenen Verkehrswege zugeordnet ist, dass vorgebbare bzw. vorgegebene Rahmenbedingungen in der Recheneinheit bestimmbar sind, anhand derer eine Auswahl von für die Routenbestimmung zu berücksichtigende Gruppen von Kartendaten bzw. entsprechender Ausschnitte der Landkarte möglich ist und die Routenbestimmung unter Einbeziehung lediglich der in den zu berücksichtigenden Gruppen von Kartendaten enthaltenen Verkehrswege erfolgt,
**dadurch gekennzeichnet,**
**dass** das Navigationsgerät so eingerichtet ist, dass die vorgebbaren bzw. vorgegebenen Rahmenbedingungen durch eine maximale Summe der Kostenwerte von zu berücksichtigenden Gruppen von Kartendaten definiert sind.

## Claims

1. Method for determining at least one route between a starting point and a destination based on digital map data reproducing a map, in particular containing information on available roads, wherein possible routes are calculated in a calculation unit by taking into account roads passing between the starting point and the destination, and wherein one or a plurality of optimum route/s defined in accordance with selected criteria is/are determined by comparison of the possible routes,
wherein in a first step, the map data are divided into groups, each of which represents one section of the map, wherein each group generated in said step is assigned the number of the roads being contained in the corresponding section of the map as a cost value, wherein in a second step, groups of map data or corresponding sections of the map to be considered in the route determination are selected based on predeterminable or else predetermined boundary conditions, and
wherein in a third step, the route is determined by taking into account only the roads being contained in the groups of map data to be considered,
**characterized in that**
a maximum sum of the cost values of groups of map data to be considered is selected for the boundary conditions which can be predetermined or which are predetermined in the second step.

2. Method according to Claim 1,
**characterized in that**
when sections of the map which are represented by two or more groups of map data overlap or else adjoin each other, the number of the roads contained in the overlapping or else adjoining regions is assigned to said sections of the map separately as a negative cost value and is added in the summation of the cost values of the adjoining or else overlapping groups.

3. Method according to Claim 2,
**characterized in that**
in the selection of the groups to be considered in the second step, the individual groups are taken as nodes and the overlapping or else adjoining regions are taken as the edges joining the nodes which are representative of the overlapping or else adjoining sections of the map, and **in that** an abstract route between the nodes in which the starting point and the destination are located is determined by taking into account the maximum admissible cost value on a correspondingly generated abstract map, wherein the nodes located along said abstract route are representative of the groups of map data to be considered in the third step.

4. Method according to any of the preceding Claims,
**characterized in that**
the groups of map data to be considered in the route determination are selected based on a maximum admissible calculation time for the route determination.

5. Navigation device for determining at least one route between a starting point and a destination based on digital map data reproducing a map, in particular containing information on available roads, comprising a calculation unit for calculating possible routes by taking into account roads passing between the starting point and the destination and for determining one or more optimum route(s) by comparing the possible routes in accordance with selected criteria, wherein the navigation device is configured such that the map data are present being divided into groups, each of which represents one section of the map,
such that each group is assigned the number of the roads being contained in the corresponding section of the map as a cost value, such that predeterminable or else predetermined boundary conditions, based on which the groups of map data or corresponding sections of the map to be considered in the route determination can be selected, can be determined in the calculation unit and the route is determined by taking into account only the roads being contained in the groups of map data to be considered, **characterized in that**
the navigation device is configured such that the predeterminable or else predetermined boundary conditions are defined by a maximum sum of the cost values of groups of map data to be considered.

## Revendications

1. Procédé pour déterminer au moins un itinéraire entre un point de départ et une destination sur la base de données cartographiques numériques reproduisant une carte routière, en particulier contenant des informations sur les routes disponibles, les itinéraires possibles étant calculés dans une unité de calcul en prenant en compte des routes passant entre le point de départ et la destination, et un itinéraire optimal ou bien une pluralité d'itinéraires optimaux défini/s conformément à des critères sélectionnés étant déterminé/s par comparaison des itinéraires possibles,
les données cartographiques étant divisées en groupes dans une première étape, chaque groupe représentant une section de la carte routière, et à chaque groupe généré dans cette étape étant attribué le nombre des routes contenues dans la section correspondante de la carte routière en tant que valeur de coût,
des groupes de données cartographiques ou des sections correspondantes de la carte routière à considérer dans la détermination de l'itinéraire étant sélectionnés sur la base de conditions limitrophes prédéterminables ou bien prédéterminées dans une seconde étape, et
l'itinéraire étant déterminé dans une troisième étape en prenant en compte seulement les routes contenues dans les groupes de données cartographiques à considérer,
**caractérisé en ce que**
la somme maximale des valeurs de coût des groupes de données cartographiques à considérer est sélectionnée pour les conditions limitrophes prédéterminables ou bien prédéterminées dans la seconde étape.

2. Procédé selon la revendication 1,
**caractérisé en ce que**
lorsque les sections de la carte routière étant représentées par deux ou bien plusieurs groupes de données cartographiques se chevauchent ou bien se côtoient, le nombre des routes contenues dans les régions chevauchantes ou bien avoisinantes est attribué auxdites sections de la carte routière séparément en tant que valeur de coût négative et est ajoutée lors de la sommation des valeurs de coût des groupes avoisinants ou bien chevauchants.

3. Procédé selon la revendication 2,
**caractérisé en ce qu'**
lors de la sélection des groupes à considérer dans la seconde étape, les groupes distincts sont regardés en tant que noeuds et les régions chevauchantes ou bien avoisinantes sont regardées en tant que bords joignant les noeuds représentant les sections chevauchantes ou bien avoisinantes de la carte routière et **en ce qu'**un itinéraire abstrait entre les noeuds, dans lequel le point de départ et la destination sont situés, est déterminé en prenant en compte la valeur de coût maximum admissible sur une carte routière abstraite générée de manière correspondante, les noeuds étant situés le long dudit itinéraire abstrait représentant les groupes de données cartographiques à considérer dans la troisième étape.

4. Procédé selon l'une quelconque des revendications précédentes,
**caractérisé en ce que**
les groupes des données cartographiques à considérer dans la détermination de l'itinéraire sont sélectionnés sur la base du temps de calcul maximum admissible pour la détermination de l'itinéraire.

5. Dispositif de navigation pour déterminer au moins un itinéraire entre un point de départ et une destination sur la base de données cartographiques numériques reproduisant une carte routière, en particulier contenant des informations sur les routes disponibles, comprenant une unité de calcul pour calculer des itinéraires possibles en prenant en compte des routes passant entre le point de départ et la destination et pour déterminer un itinéraire optimal ou bien plusieurs itinéraires optimaux en comparant les itinéraires possibles conformément à des critères sélectionnés, le dispositif de navigation étant configuré de telle manière que les données cartographiques sont disponibles divisées en groupes, chaque groupe représentant une section de la carte routière,
de telle manière qu'à chaque groupe est attribué le nombre des routes contenues dans la section correspondante de la carte routière en tant que valeur de coût,
de telle manière que des conditions limitrophes prédéterminables ou bien prédéterminées peuvent être déterminées dans l'unité de calcul, sur la base desdites conditions les groupes de données cartographiques ou des sections correspondantes de la carte routière à considérer dans la détermination de l'itinéraire peuvent être sélectionnés, et
de telle manière que l'itinéraire est déterminé en prenant en compte seulement les routes contenues dans les groupes des données cartographiques à considérer,
**caractérisé en ce que**
le dispositif de navigation est configuré de telle manière que les conditions limitrophes prédéterminables ou bien prédéterminées sont définies par une somme maximale des valeurs de coût des groupes de données cartographiques à considérer.
